# EUROPEAN PATENT SPECIFICATION

(11) **EP 0 862 254 B1**
(45) Date of publication and mention of the grant of the patent: **28.05.2003**
(21) Application number: 98102612.3
(22) Date of filing: 16.02.1998
(51) Int. Cl.: H02G 15/013, H02G 9/10, F16L 5/10

(54) **Cable sealing**
Kabelabdichtung
Dispositif d'étanchéité pour câble

(30) Priority: 27.02.1997 GB 9704037
(43) Date of publication of application: 02.09.1998
(73) Proprietor: Fibresec Holdings Limited, Skipton, North Yorkshire BD23 2QR (GB)
(72) Inventor: Jennings, Michael, Baildon, West Yorkshire BD23 2QR (GB)
(74) Representative: Wharton, Peter Robert

(56) References cited:
- DE-C- 3 909 030
- US-A- 5 208 428
- US-A- 5 442 140

## Description

The present invention relates to a dual purpose sleeve assembly for sealing a cable carrying service pipe or duct to a hole in an access chamber wall to prevent water entering the chamber from outside and for sealing the individual cables to prevent petrol fumes from entering the cable duct. The latter function is particularly important where the access chamber has a sealed cover as described in the Applicants' own PCT Application No WO 95/21967 as in such a confined space with the cover providing a virtually fluid tight seal even a relatively small spillage of petrol can result in a considerable concentration of fumes within the access chamber, and if the individual cables are not adequately sealed these fumes may enter the duct and travel up it, presenting a fire risk. The cable sealing aspect of the invention is also of benefit in access chambers having an internal stand pipe into which petrol is pumped directly from the tanker using a special coupling - in the event of this coupling failing there would be a relatively large petrol spillage into the access chamber, and the sleeve assembly of the present invention would in such a situation ensure that no fumes were able to enter the cable duct.

Conventionally, cable carrying ducts are sealed to holes in the chamber walls and the individual cables spread out from the open end of the duct. Expanded polystyrene is often used to seal the end of the duct, but usually this does not seal the spaces between the individual cables.

US-A-5442140 discloses a conduit and cable sealer having cable-accepting seals, itself being sealable within the end of a conduit.

This conduit sleeve assembly includes a sleeve having an open end adapted to be secured to an access chamber wall in the region of a conduit entry hole therein, and a closed opposite end comprising a plurality of initially closed ended hollow projections each adapted to receive an individual cable from a bundle of cables carried within the conduit by cutting off the end of the projection to allow passage of the cable therethrough.
US-A-5442140 provides also a method of sealing a conduit carrying a number of individual cables therein, as well as sealing the spaces between the individual cables, the method comprising providing a conduit sleeve assembly, including a sleeve having an open end and a closed opposite end comprising a plurality of initially closed ended hollow projections each adapted to receive an individual cable from a bundle of cables carried within the conduit, cutting off the end of the projection and feeding the cable therethrough and repeating for each cable required to be sealed, securing said open end of the sleeve to an access chamber wall in the region of a conduit entry hole therein, securing the sleeve to a conduit inserted through said hole, and securing each cable within its respective cut-off projection. However, it does not seal to the wall of the vault or chamber.

It is the aim of the present invention to provide a sleeve which effectively seals all of the individual cables carried in the pipe, as well as sealing the pipe itself to the access chamber wall.

According to a first aspect of the present invention there is provided a pipe sleeve assembly including a sleeve having an open end adapted to be secured in sealing engagement to an access chamber wall in the region of a pipe entry hole therein, and a closed opposite end comprising a plurality of initially closed ended hollow projections each adapted to receive an individual cable from a bundle of cables carried within the pipe by cutting off the end of the projection to allow passage of the cable therethrough.

Preferably, the sleeve also includes a middle portion joining said two end portions, said middle portion being adapted to be secured in sealing engagement against the exterior of that portion of the pipe extending through the entry hole into the access chamber.

Conveniently, the projections in the sleeve each taper in cross section which decreases towards the initially closed end, such that varying cable thicknesses can readily be accommodated by cutting off the projection either closer to or further away from the closed end.

During installation, only those projections required for the cables present within the pipe are cut through, the remainder are left closed to provide effective sealing of all the spaces between the individual cables.

Preferably, the open end of the sleeve includes flange means, for use in securing the sleeve in sealing engagement with the hole in the access chamber wall.

Preferably, the sleeve assembly also includes inner and outer flange rings for securing to the inner and outer surfaces of the access chamber wall, respectively. A flange gasket is located between inner ring and the access chamber wall, and the three components are drawn together by means of set screws through co-aligned holes in the two rings. The inner flange ring has a collar extending therefrom, against which the flanged open end of the pipe sleeve is clamped by means of a circular strap. Similarly, the middle portion of the sleeve is secured to the exterior of the pipe with a smaller circular strap, and the cut projections are sealed to their respective individual cables by even smaller circular straps.

According to a second aspect of the present invention there is provided a method of sealing a pipe carrying a number of individual cables therein, to a hole in an access chamber wall, as well as sealing the spaces between the individual cables, the method comprising providing a pipe sleeve assembly including a sleeve having an open end and a closed opposite end comprising a plurality of initially closed ended hollow projections each adapted to receive an individual cable from a bundle of cables carried within the pipe, cutting off the end of the projection and feeding the cable therethrough and repeating for each cable required to be sealed, securing said open end of the sleeve in sealing engagement to an access chamber wall in the region of a pipe entry hole therein, securing the sleeve to a pipe inserted through said hole, and securing each cable within its respective cut-off projection, and securing a middle portion, joining said two end portions, in sealing engagement against the exterior of that portion of the pipe extending through the entry hole into the access chamber.

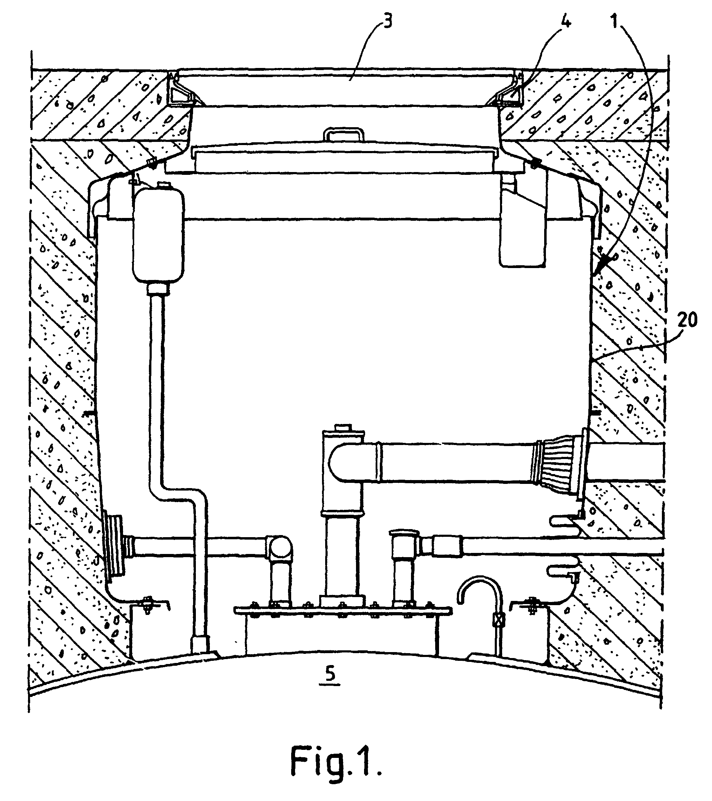

Embodiments of the present invention will now be described, by way of example only, with reference to the accompanying drawings in which:-
Figure 1 is a schematic of the internal and cross sectional structure of the type of access chamber to which the invention would normally be applied,
Figure 2 is a partially cut-away perspective view of a first embodiment of a sleeve assembly according to the present invention, installed in an access chamber wall;
Figure 3 is an exploded perspective view of the assembly illustrated in Figure 1; and
Figure 4 is a perspective view of the exterior appearance of the sleeve before installation.
Figure 5 is a partially cut-away perspective view of a second embodiment of a sleeve assembly according to the present invention, installed in an access chamber wall;
Figure 6 is an exploded perspective view of the assembly illustrated in Figure 5,
Figure 7 is a perspective view of the exterior appearance of the sleeve before installation,
Figure 8 illustrates in cross section the various components of the assembly both separately and assembled,
Figure 9 is a sectional view of the sleeve assembly secured to the pipe and chamber wall,
Figure 10 is an enlarged partial section of the second embodiment of the sleeve, and
Figure 11 is a plan view of the sleeve of Figure 10.

Referring to the drawings, an access chamber 1 comprises walls 20, positioned above and connected to the top of a storage tank 5, and an access hole bounded by a frame 4 and a cover 3 seated within the frame. It is necessary to carry electrical cables 32 into the interior of the access chamber, and this is done through a pipe or service duct 30.

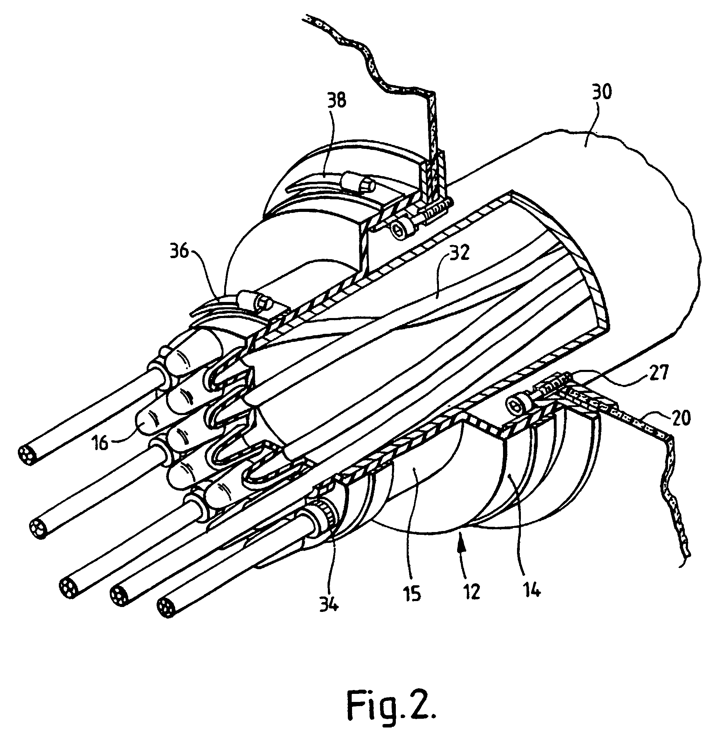

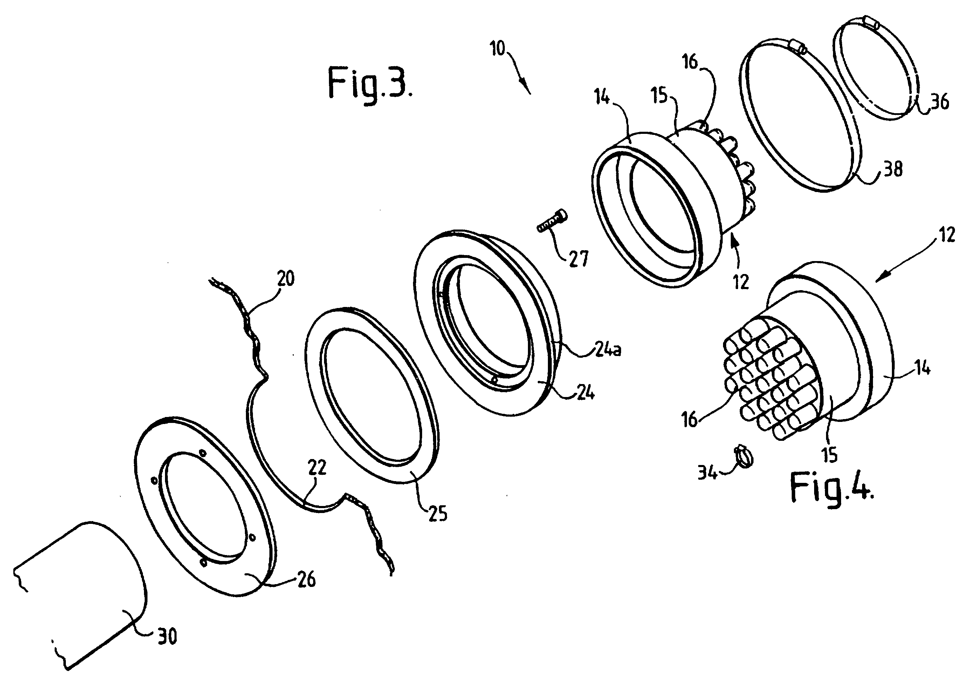

A first embodiment of the sleeve assembly is shown in figures 2, 3 and 4 and includes a sleeve 12 having a flange 14 surrounding its open end and an end portion terminating in hollow, tapering, finger-like projections 16, spaced equidistantly across the cross section of the sleeve. A middle portion 15 extends from the flange 14 to the opposite end, and this middle portion is dimensioned to receive a standard pipe diameter snugly within.

The sleeve 12 is fixed to a hole 22 in the access chamber wall 20, such that the projections 16 protrude into the interior of the chamber, by means of inner and outer flange rings 24, 26 respectively, which are located either side of the hole 22 and drawn together by means of four set screws 27 in aligned holes in the inner and outer flange rings. A nitrile flange gasket 25 is disposed between the inner flange ring and the access chamber wall, to provide a fluid tight seal.

The cable carrying pipe 30 (typically 100mm in diameter) is inserted through the hole 22 and into the seal 12, until the open end of the pipe reaches to the furthermost end of the middle portion 15. The cables 32 are then separated and each one passed through one of the tapering projections 16, having first cut the end off said projection, at a point along the length of the projection which gives the desired diameter of hole to receive the cable snugly within, the cable then being held and sealed within the cut-off projection by means of a small circular stainless steel strap or "Jubilee" clip 34.

The flange 14 is held onto a collar 24a (an integral part of inner flange ring 24) by means of a suitably dimensioned circular stainless steel strap 38, and likewise the middle portion 15 of the sleeve is held onto the pipe 30 by means of a suitably dimensioned circular stainless steel strap 36.

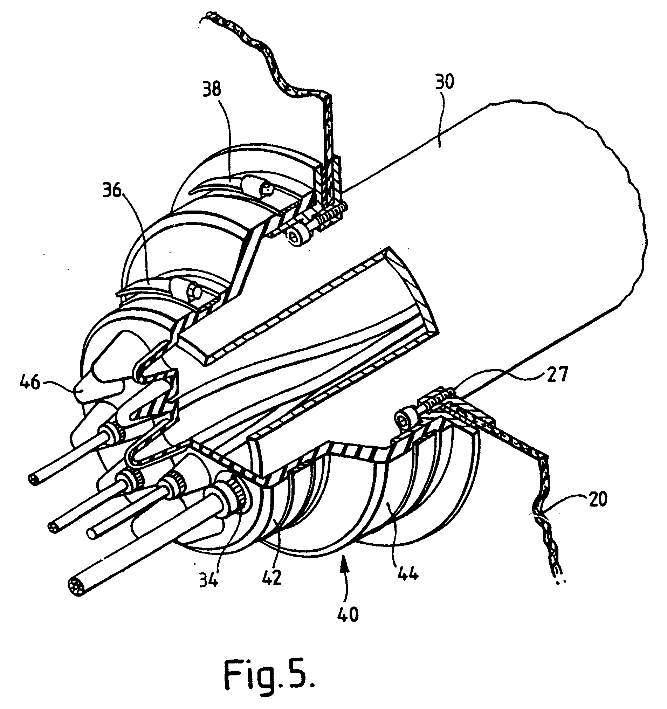

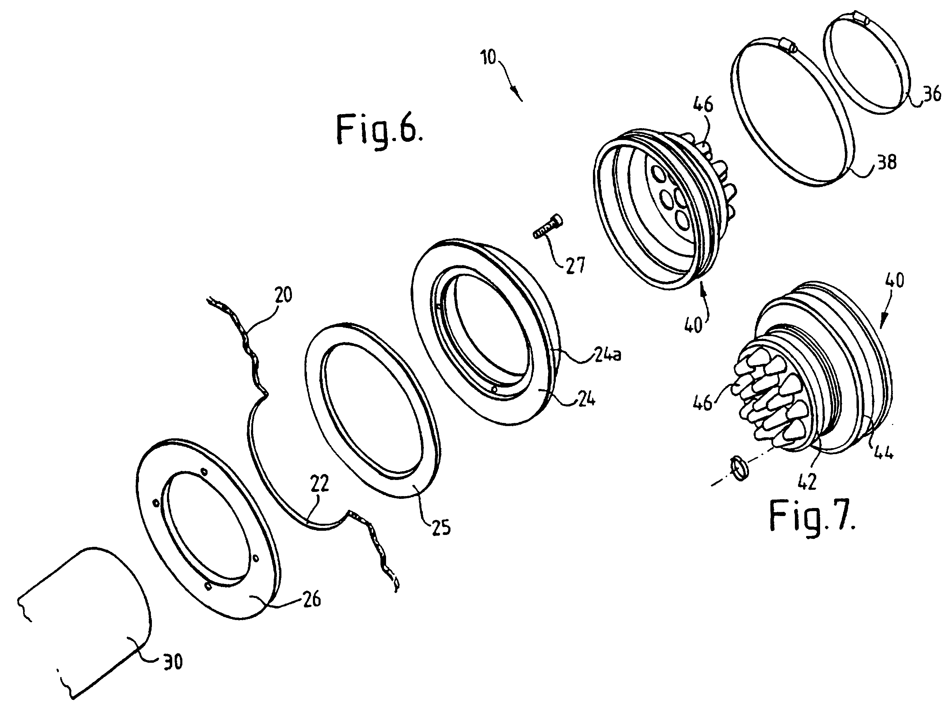

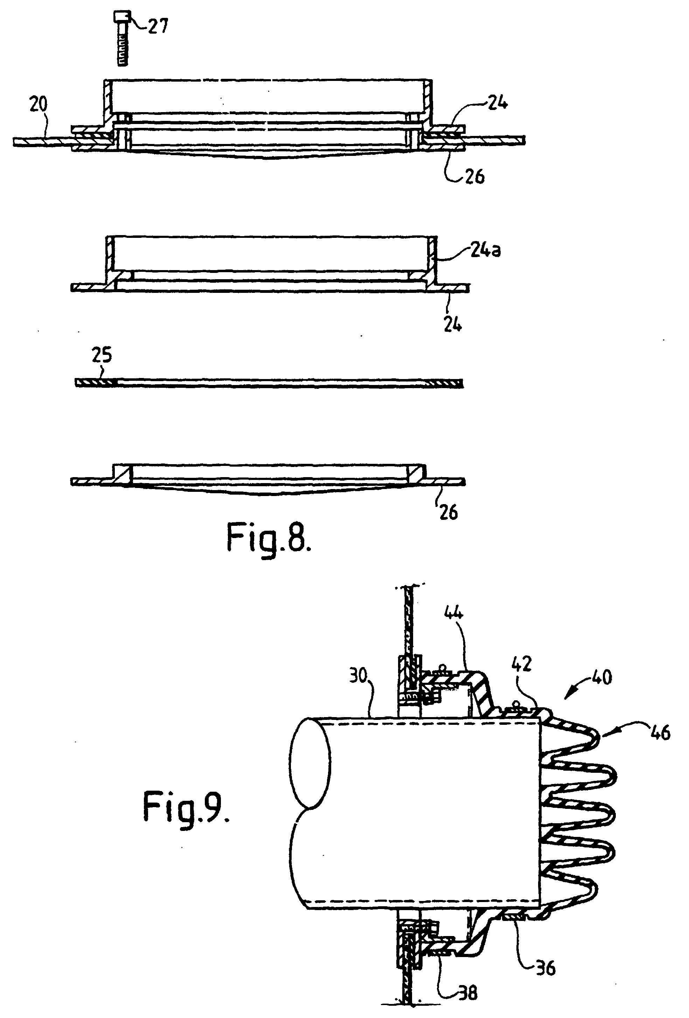

Figures 5 through 11 illustrate a second embodiment of the sleeve assembly, in which the sleeve itself and the projections are shaped somewhat differently, but all of the other components of the assembly are identical and have thus been accorded the same reference numerals. This version of the sleeve 40 also has a flange 44 at its open end, a middle portion 42 dimensioned so as to fit the pipe 30 snugly within, and at its closed end a series of projections referred to collectively as 46. These are not all equal in size and shape but instead comprise three different types - five 46a of dimensions 17mm x 4mm x 20mm positioned equally around the periphery of the sleeve, five 46b of dimensions 13mm x 3mm x 20mm positioned equally around the periphery of the sleeve between the projections 46a, and six 46c of dimensions 13mm x 3mm x 30mm positioned centrally inside 46a and 46b. The projections 46a, 46b are more suited to the larger diameter cables whereas the slightly taller, thinner projections 46c are more suited to the smaller diameter cables.

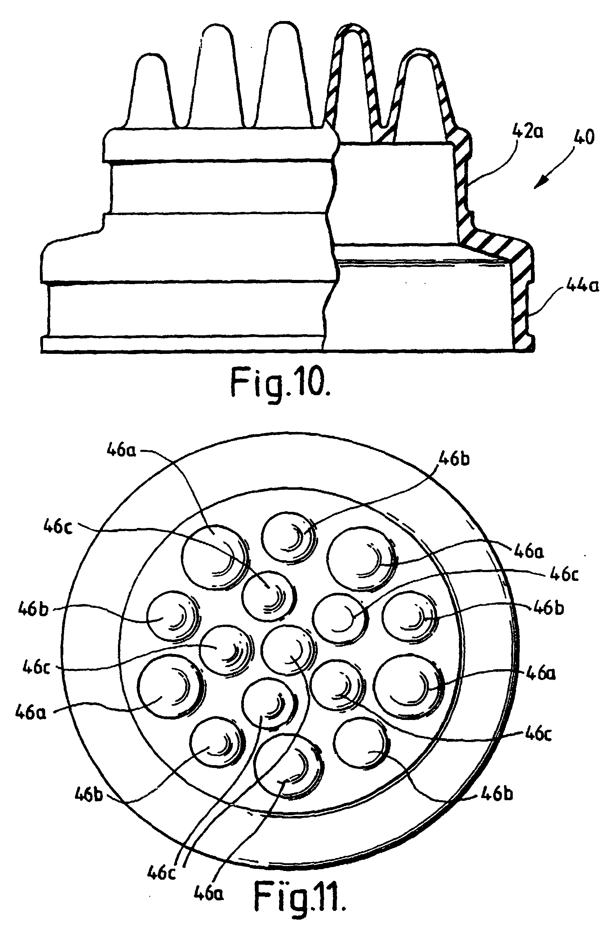

As illustrated in Figure 10, the sides of the sleeve 40 include recesses 42a, 44a to permit seating of bands 36, 38 respectively. The method of fixing the assembly to the access chamber wall and the cables to the sleeve is exactly as described above with reference to the first embodiment.

The various parts of the assembly, when installed as described above, although not necessarily in the same order, provides substantially fluid-tight sealing of the point of entry of the pipe, as well as the spaces between the individual cables carried within the pipe. In cases where the access chamber is totally sealed with a cover as previously referred to, the sleeve prevents ingress of petrol fumes into the service duct. This can be a particular problem should a positive pressure differential arise between the interior and the exterior of the chamber, such as can occur due to ambient temperature changes, and if fumes were permitted to enter the service duct they may travel up the duct into the service kiosk where electrical equipment is in use, presenting a serious fire risk.

## Claims

1. A pipe sleeve assembly including a sleeve (12,40) having an open end adapted to be secured in sealing engagement to an access chamber wall (20) in the region of a pipe entry hole therein, and a closed opposite end comprising a plurality of initially closed ended hollow projections (16, 46) each adapted to receive an individual cable from a bundle of cables carried within the pipe (30) by cutting off the end of the projection to allow passage of the cable therethrough, wherein the sleeve also includes a middle portion (15,42) joining said two end portions, said middle portion being adapted to be secured in sealing engagement against the exterior of that portion of the pipe extending through the entry hole into the access chamber.

2. A pipe sleeve assembly according to Claim 1, wherein the projections (16,46) in the sleeve each taper in cross section which decreases towards the initially closed end, such that varying cable thicknesses can readily be accommodated by cutting off the projection either closer to or further away from the closed end.

3. A pipe sleeve assembly according to any of Claims 1 or 2, wherein the open end of the sleeve includes flange means (14,44) for use in securing the sleeve in sealing engagement with the hole in the access chamber wall.

4. A pipe sleeve assembly according to any of Claims 1 to 3, wherein the sleeve assembly also includes inner and outer flange rings (24,26) for securing to the inner and outer surfaces of the access chamber wall, respectively.

5. A pipe sleeve assembly according to Claim 4, wherein the inner flange ring (24) has a collar (24a) extending therefrom, against which the flanged open end of the pipe sleeve is clamped.

6. A method of sealing a pipe (30) carrying a number of individual cables therein, to a hole (22) in an access chamber wall (20), as well as sealing the spaces between the individual cables, the method comprising providing a pipe sleeve assembly, including a sleeve (12, 40) having an open end and a closed opposite end comprising a plurality of initially closed ended hollow projections (16, 46) each adapted to receive an individual cable from a bundle of cables carried within the pipe, cutting off the end of the projection and feeding the cable therethrough and repeating for each cable required to be sealed, securing said open end of the sleeve in sealing engagement to an access chamber wall in the region of a pipe entry hole therein, securing the sleeve to a pipe (30) inserted through said hole, securing each cable within its respective cut-off projection, and securing a middle portion (15,42), joining said two end portions, in sealing engagement against the exterior of that portion of the pipe (30) extending through the entry hole into the access chamber.

## Patentansprüche

1. Rohrmuffenanordnung mit einer Muffe (12, 40), die ein offenes Ende hat, das dazu ausgelegt ist, in abdichtendem Eingriff mit einer Wand (20) einer Zutrittskammer in dem Gebiet eines darin ausgebildeten Rohreintrittsloches befestigt zu werden, und die ein gegenüberliegendes geschlossenes Ende hat, das mit einer Vielzahl von hohlen Vorsprüngen (16, 46) versehen ist, die anfänglich geschlossene Enden haben und die jeweils dazu ausgelegt sind, ein einzelnes Kabel aus einem in dem Rohr (30) geführten Kabelbündel aufzunehmen, indem das Ende des Vorsprungs abgeschnitten wird, um dort hindurch dem Kabel einen Durchgang zu ermöglichen, wobei die Muffe ferner einen mittleren Bereich (15, 42) aufweist, der die beiden Enden verbindet,
wobei der mittlere Bereich dazu ausgelegt ist, in abdichtendem Eingriff mit der Außenseite desjenigen Bereiches des Rohres befestigt zu werden, der sich durch das Eintrittsloch in die Zutrittskammer hinein erstreckt.

2. Rohrmuffenanordnung nach Anspruch 1,
wobei die Vorsprünge (16, 46) in der Muffe sich jeweils im Querschnitt verjüngen, der zum anfänglich geschlossenen Ende hin abnimmt, so daß verschiedene Kabeldicken ohne weiteres untergebracht werden können, indem der Vorsprung näher zu dem oder weiter entfernt von dem verschlossenen Ende abgeschnitten wird.

3. Rohrmuffenanordnung nach Anspruch 1 oder 2,
wobei das offene Ende der Muffe Flanscheinrichtungen (14, 44) aufweist, die dafür verwendet werden, die Muffe in abdichtendem Eingriff mit dem Loch in der Zutrittskammer zu befestigen.

4. Rohrmuffenanordnung nach einem der Ansprüche 1 bis 3,
wobei die Muffenanordnung ferner innere und äußere Flanschringe (24, 26) aufweist, um sie an der inneren bzw. an der äußeren Oberfläche der Wand der Zutrittskammer zu befestigen.

5. Rohrmuffenanordnung nach Anspruch 4,
wobei der innere Flanschring (24) mit einem sich von dort aus erstreckenden Kragen (24a) versehen ist, an dem das angeflanschte offene Ende der Rohrmuffe festgeklemmt wird.

6. Verfahren zum Abdichten eines Rohres (30), das darin eine Anzahl von einzelnen Kabeln führt, an einem Loch (22) in einer Wand (22) einer Zutrittskammer sowie zum Abdichten der Räume zwischen den einzelnen Kabeln, wobei das Verfahren folgende Schritte aufweist:
- es wird eine Rohrmuffenanordnung bereitgestellt, die eine Muffe (12, 40) aufweist, die ein offenes Ende und ein gegenüberliegendes geschlossenes Ende hat, das mit einer Vielzahl von hohlen Vorsprüngen (16, 46) versehen ist, die anfänglich geschlossene Enden haben und die jeweils dazu ausgelegt sind, ein einzelnes Kabel aus einem in dem Rohr geführten Kabelbündel aufzunehmen,
- das Ende des Vorsprungs wird abgeschnitten und das Kabel wird dort hindurchgeführt, wobei dies für jedes Kabel wiederholt wird, dessen Abdichtung erforderlich ist,
- das offene Ende der Muffe wird in abdichtendem Eingriff mit einer Wand einer Zutrittskammer in dem Gebiet eines darin ausgebildeten Rohreintrittsloches befestigt,
- die Muffe wird an einem durch das Loch eingeführten Rohr (30) befestigt,
- jedes Kabel wird in seinem jeweiligen abgeschnittenen Vorsprung befestigt, und
- ein mittlerer Bereich (15, 42), der die beiden Enden verbindet, wird in abdichtendem Eingriff mit der Außenseite desjenigen Bereiches des Rohres (30) befestigt, der sich durch das Eintrittsloch in die Zutrittskammer hinein erstreckt.

## Revendications

1. Ensemble de manchon de tuyau comprenant un manchon (12, 40) comportant une extrémité ouverte adaptée pour être fixée en prise étanche à une paroi de chambre d'accès (20) dans la région d'un trou d'entrée de tuyau de celle-ci, et une extrémité opposée fermée comprenant une pluralité de protubérances creuses à extrémité initialement fermée (16, 46) adaptées chacune pour recevoir un câble individuel d'un faisceau de câbles supporté dans le tuyau (30) en coupant l'extrémité de la protubérance afin de permettre le passage du câble à travers celle-ci, dans lequel le manchon comprend également une partie centrale (15, 42) reliant lesdites deux parties d'extrémité, ladite partie centrale étant adaptée pour être fixée en prise étanche contre l'extérieur de cette partie du tuyau s'étendant à travers le trou d'entrée dans la chambre d'accès.

2. Ensemble de manchon de tuyau selon la revendication 1, dans lequel les protubérances (16, 46) dans le manchon ont chacune une section conique qui diminue vers l'extrémité initialement fermée, de telle sorte que des épaisseurs de câble variables puissent être facilement reçues en coupant la protubérance soit plus près, soit plus loin de l'extrémité fermée.

3. Ensemble de manchon de tuyau selon l'une quelconque des revendications 1 ou 2, dans lequel l'extrémité ouverte du manchon comprend des moyens formant bride (14, 44) destinés à être utilisés pour fixer le manchon en prise étanche avec le trou dans la paroi de la chambre d'accès.

4. Ensemble de manchon de tuyau selon l'une quelconque des revendications 1 à 3, dans lequel l'ensemble de manchon comprend également des bagues de bride (24, 26) pour la fixation, respectivement, aux surfaces intérieure et extérieure de la paroi de la chambre d'accès.

5. Ensemble de manchon de tuyau selon la revendication 4, dans lequel la bague de bride intérieure (24) comporte un collier (24a) s'étendant à partir de celle-ci, contre lequel l'extrémité ouverte à bride du manchon de tuyau est serrée.

6. Procédé de fixation étanche d'un tuyau (30), supportant un certain nombre de câbles individuels à l'intérieur de celui-ci, à un trou (22) dans une paroi de chambre d'accès (20), ainsi que de fermeture étanche des espaces entre les câbles individuels, le procédé comprenant la foumiture d'un ensemble de manchon de tuyau, comprenant un manchon (12, 40) comportant une extrémité ouverte et une extrémité opposée fermée comprenant une pluralité de protubérances creuses à extrémité initialement fermée (16, 46) adaptées chacune pour recevoir un câble individuel d'un faisceau de câbles supporté dans le tuyau, la coupe de l'extrémité de la protubérance et l'avance du câble à travers celle-ci et la répétition pour chaque câble devant être fixé de manière étanche, la fixation de ladite extrémité ouverte du manchon en prise étanche à une paroi de chambre d'accès dans la région d'un trou d'entrée de tuyau dans celle-ci, la fixation du manchon à un tuyau (30) inséré à travers ledit trou, la fixation de chaque câble dans sa protubérance découpée respective, et la fixation d'une partie centrale (15, 42), reliant lesdites deux parties d'extrémité, en prise étanche contre l'extérieur de cette partie du tuyau (30) s'étendant à travers le trou d'entrée dans la chambre d'accès.
